# EUROPEAN PATENT SPECIFICATION

(11) **EP 0 682 608 B1**
(45) Date of publication and mention of the grant of the patent: **08.01.1997**
(21) Application number: 92919514.7
(22) Date of filing: 17.09.1992
(51) Int. Cl.: B60R 25/00, B60R 25/04

(54) **VEHICLE SECURITY SYSTEM**
KRAFTFAHRZEUGSICHERHEITSYSTEM
SYSTEME DE SECURITE DE VEHICULE

(30) Priority: 17.09.1991 GB 9119924; 21.04.1992 GB 9208554
(43) Date of publication of application: 22.11.1995
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR)
(72) Inventor: BIDDLECOMBE, David Ernest, Worthing, Sussex BN11 4AS (GB)
(74) Representative: Messulam, Alec Moses
(86) International application number: GB9201705
(87) International publication number: WO9305987

(56) References cited:
- EP-A- 0 105 774
- EP-A- 0 372 741
- GB-A- 2 251 503
- US-A- 4 477 874

## Description

### Field of the invention

The present invention relates to a security system for a vehicle and may be applied to motor vehicles, boats and aircraft to prevent theft and unauthorised use.

### Background of the invention

Vehicle thefts have reached the stage of causing serious public concern and much research has been devoted to enhancing vehicle security. Conventionally, purely mechanical devices, i.e. locks, have been used to prevent access to the interior of the vehicles or inhibit operation of the steering or the gearbox. There have also been available in the so-called after market simple electrical immobilisation devices which detect tampering and inhibit engine operation by open circuiting units such as the starter motor or fuel pump, or short circuiting units such as the crankshaft position sensor or the low tension lead of the ignition coil.

More recently, vehicle manufacturers have considered incorporating more sophisticated systems as original equipment and the present invention is a development of one such system which is similar, for example, to that described in US Patent No. 4,366,466. Such systems include a passive encoded circuit or key which can be read by a reader in the vehicle. The code read from the key is compared with a stored code and the vehicle is immobilised in the event of a mismatch.

A serious problem to the immobilisation of a vehicle is presented by the possibility of the security system being bypassed by what is termed "hot wiring". For example, if immobilisation is effected by cutting off the power supply to the starter motor or the fuel pump, then directly connecting these units to the vehicle battery live terminal would render the security system useless

To avoid this problem, the reader does not simply operate relays connected to such units, but communicates with them in code over a data transfer bus. As each unit connected to the bus can only be activated by receiving the correct code from the reader, bypassing the security simple is not possible. The would be thief must emulate the encoded signals generated by the key reader and this is not easily achievable.

A difficulty with even this system is that, for servicing purposes, it must be possible to replace a unit in the event of failure. For this reason, new units cannot be encoded prior to being fitted to a vehicle. Should a thief obtain, for example, a new engine management system computer and plug it in the place of an existing one, the security will be inoperative as the new computer will automatically learn the existing code of the vehicle key.

### Object of the invention

The present invention therefore seeks to provide an improved security system in which replacement of individual units will not allow the vehicle to function correctly.

### Summary of the invention

According to the present invention, there is provided a vehicle security system, comprising a coded key, a reader for reading the code of the key and generating an encoded electrical signal, a data transfer bus connected to the reader, and a plurality of units connected to the data transfer bus, characterised in that each unit comprises a signal processor for comparing encoded signals received over the data transfer bus with predetermined codes stored within the unit and operative to prevent operation of the unit if certain received codes are invalid, and in that each unit is further arranged upon receiving an invalid code to transmit an error code over the data transfer bus to the reader or to other units connected to the bus, and upon detection of an error code on the bus from at least selected ones of the units, other units connected to the bus are rendered inoperative by their signal processors even if the latter units had received valid codes from the reader.

The units referred to above can be essential or ancillary units. Examples of essential units are the engine management computer, the fuel pump, starter motor, braking system, or the transmission system. Ancillary units may include modules for operating the electric windows, seats, instrument cluster, lights and so on. The nature of the response to an error code by the system can be dependent on the unit which generates the error code.

For example, if it is found that a safety critical system is not responding correctly, then total immobilisation may be selected. However, if a radio or window unit responds with an error code, then it may suffice for the system to alert the driver of the failure.

The verification of system integrity which results from the transmission of error codes along the bus offers a first advantage of improving vehicle safety. A vehicle will for example not be allowed to start if the transmission or brakes have failed. The starter motor can be prevented from draining the battery if the engine has been disabled by the engine management computer.

The system however also offers improved security against theft. Supposing for example that a new key and reader unit is fitted and the engine management computer is replaced. On switching on, the reader will send a code to the new engine management computer which will record it and enable the engine to operate with the new code. However, the error code generated by another essential unit, such as the fuel pump or the starter motor, will alert the system to the attempted theft and will again disable the engine management system. By virtue of the fact that codes are distributed around the vehicle, many in units which are inaccessibly located, roadside theft is effective prevented and as full system shut down can result, the thief is given little indication as to the source of the error code.

Of course, a person having the correct key and reader will have no difficulty replacing a unit. Each unit will in this case be correctly matched when the new one is added to the system for the first time and as no error code will be generated, the null code with which the new unit is shipped will be replaced by the correct system code.

To prevent theft by simultaneous multiple replacement of units, the detection of more that one null code may be used to cause system shut down unless all units are new. This does not interfere with authorised repair as units can be replaced one at a time but does inhibits theft. The ability to operate with only new and uncoded units throughout the vehicle must of course be retained to allow the vehicle to be manufactured without having to manufacture matched units and readers.

To allow the vehicle to be driven and tested in a factory during manufacture, it may be possible to enable all units in the vehicle using a special key generating a null code without causing all the units to be reconfigured. Once the vehicle units have been configured with a key not containing the null code, the null code will cease to function.

It is convenient for the electronic key of the invention to be integrated with a conventional mechanical key for operating the door locks and the ignition lock. For example, the circuit can be embedded within the shaft or the handle of the key. As a further possibility, the electronic key may be formed within the key fob.

The key circuitry can be a passive circuit (no internal power supply) energised by a magnetic field or electro-magnetic radiation emitted by the reader. Alternatively, power can be coupled to the key circuit by contacts. The encoded signal may in turn be transmitted to the reader by radio, infra red or electrical contact methods. It is preferred to use contactless coupling as the operation of the electronic security system will then be totally transparent to the user and will operate reliably each time the ignition key is inserted into the lock.

As the system of the invention already has the facility to disable units even when they have received their valid codes, this facility may be utilised to disable operation of the vehicle under other conditions. For example, the key may be encoded with time or mileage information to prevent the system from operating when a time or mileage limit has been exceeded. Such a facility may be brought into operation, for example, with hire car fleets to prevent theft after the legal hire period has expired.

### Brief description of the drawings

The invention will now be described further, by way of example, with reference to the accompanying drawings, in which :
Figure 1 is a schematic diagram of a security system of the invention, and
Figure 2 shows a flow chart for the operation of the system illustrated in Figure 1.

### Description of the preferred embodiment

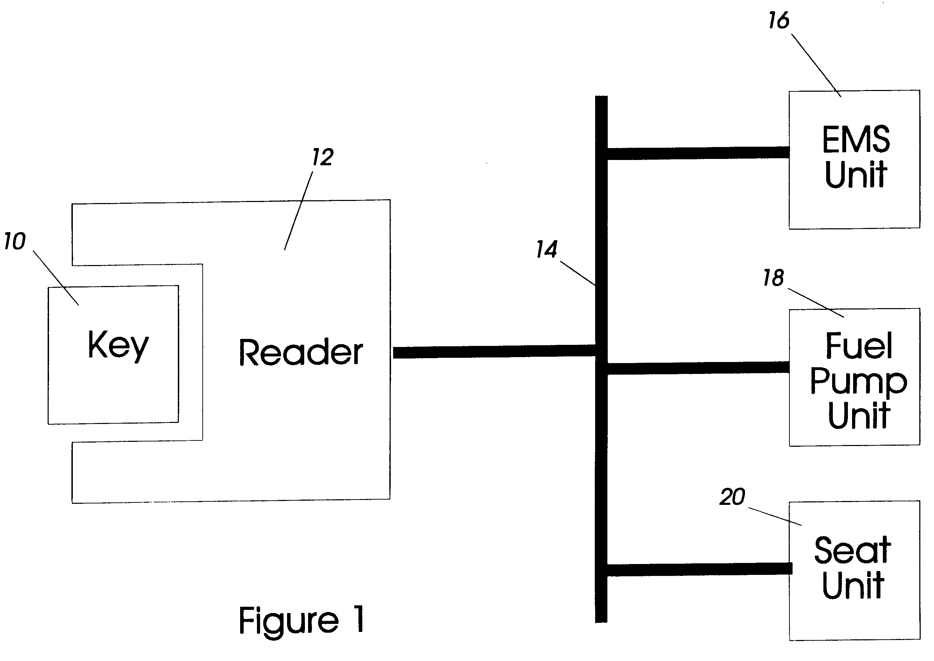

In Figure 1 an electronic key 10 is constructed in the form of a passive transponder built into the handle of an otherwise convention ignition key of a motor vehicle. When the ignition key is inserted in the ignition lock, the electronic key is located within range of a stationary reader 12 which while the ignition lock is being turned interrogates the transponder 12. The electronic key 10 and reader 12 will not be described herein in detail as they are known per se, a suitable example being described in detail in US Patent No. 5,053,774.

For the present purposes, it suffices to know that after the key 10 is inserted in the reader 12, the latter transmits electromagnetic radiation which powers the transponder circuit of the key 10. The latter emits an encoded radio signal which is received and decoded by the reader 12. The received code is compared with a predetermined code in the reader 12. In the event of a match, a digital encoded signal is transmitted over a data transfer bus 14 to various units 16, 18 and 20 distributed about the vehicle.

It has previously been proposed to replace the dedicated wiring loom of a vehicle by a bus which includes power lines and data transfer lines carrying serial data. The bus 14 in the present invention may be such a bus. All the electrical components of the vehicle are connected to the same bus by units or modules which are programmed to recognise their own address and which act to detect and implement instructions on the data bus intended for their associated components. For example, if the control unit associated with the headlights has address No. 38, then it will detect on signals on the common bus 14 with that address. If the driver wishes the headlights to be turned on, then on receiving the instruction from a central control circuit, the unit will effect a connection between the headlights and the common power lines through an electronic switch or a relay built into the unit. The advantage of such a wiring loom system is that it requires fewer wires, is easier to install and avoids the need for a manufactures to produce a wide variety of looms. The same wiring can be used for all vehicles and only the programming of the system will vary between vehicle models having different equipment specifications.

The preferred embodiment of the present invention makes use of the presence of a data bus in the vehicle to provide increased security against theft by storing security codes in several of these units or modules.

There will be some modules the operation of which is essential to the safe functioning of the vehicle. Two such essential units are shown by way of example in Figure 1, first unit 16 being integrated into the engine management system (EMS) which controls spark timing and fuelling of the engine and the second being a unit 18 which turns on the fuel pump. Further examples of essential units would be any connected to the starter motor, to a traction control system, to an active suspension system or to an anti-lock breaking system.

Other modules will operate ancillary equipment, such as the seat unit 20 shown in Figure 1 which allows adjustment of the seat position. There are many further examples of ancillary equipment, such as the radio, instrument dials, there being too many to provide an exhaustive list.

In the illustrated embodiment, codes matching the output code of the reader 12 on receiving the correct key 10 are stored in several, if not all of the control units distributed around the vehicle. If they receive the wrong code from the reader, for example if a thief succeeds in by-passing the reader 12 or if the reader is replaced by a reader stolen from another vehicle, then none of the encoded units will operate.

A problem arises on account of the fact that replacement units are provided uncoded and record the first code they receive when installed in a vehicle in a one time programmable (OTP) memory. This means that armed only with a few essential units and a reader, a thief could circumvent the security system.

This possibility is reduced in the present invention in that the units 16, 18, 20 do not simply receive control signals from the bus 14 but transmit back information on their status if they fail to recognise the code that they receive. This information can be read either by the reader 12 or by any of the other units 16, 18, 20 which may then be programmed to take the appropriate action having regard to the identity of the failed unit.

The strategy adopted in the preferred embodiment of the invention takes into account whether the unit is an essential or an ancillary unit when deciding on the action of the taken. If a unit regarded as essential fails, then the vehicle is immobilised. This prevents theft and is also a safeguard against the vehicle being driven away in a dangerous condition if the essential component has failed for some other reason. If another unit fails, then less severe action can be taken such as warning the driver of the fault. However, even with ancillary units, the simultaneous failure of several units to recognise the code transmitted by the reader could signify attempted theft and be used to immobilise the vehicle completely.

The advantage of distributing codes in many places around the vehicle are numerous. First, the units are usually in inaccessible locations, such as behind the instrument panel, inside the door trim or within the housing of the fuel pump. As a consequence, even with a complete new set of units and a new key and reader unit, several hours would be required in changing the units before the vehicle could be driven away. This makes theft from the roadside extremely difficult. Crime statistics suggest that any system requiring more than fifteen to twenty minutes to by-pass will prevent theft in the majority of cases.

Stealing a vehicle to break it up for spare parts will no longer be viable as the expensive units will not function in any other vehicle once they have been programmed for a particular code. Also because numerous new units would need to be installed before the vehicle could be put back into a state in which it could be re-sold, even the professional thief would be deterred.

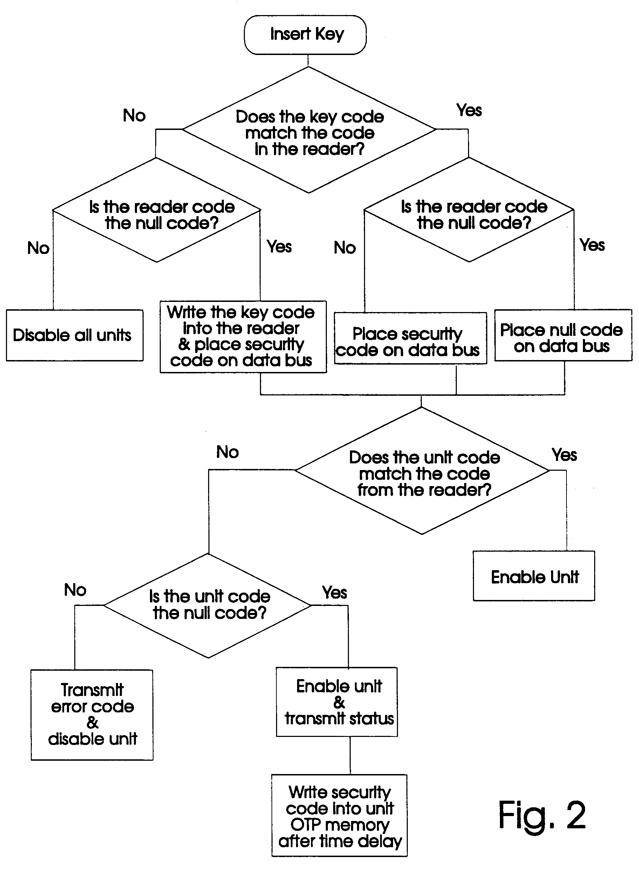

The units 16 to 18 and the reader include programmed processors and their operation in the preferred embodiment of the invention is best understood by reference to the flow chart of Figure 2.

When the key 10 is inserted in the reader 12, the processor in the latter compares the read key code with a code previously stored into the OTP memory of the reader. If there is a mismatch, then it is determined if the reader contained the null code (for example Hex FFFFF), i.e. if the reader had been previously encoded. If not, then the received code is stored in the OTP of the reader and thereafter the reader will only respond to that same key code. In the event of a mismatch between the key code and a previously encoded reader, then no output data is placed on the bus 14 and all units, essential and ancillary, will remain disabled.

If there is a correct match between the key and the reader, then it is determined if the reader contained a null code. If so a null code is placed on the data bus otherwise a security code associated with the key code is placed on the bus.

On detecting a code on the bus, each unit compares the code with that in its own OTP memory. In there is a match, then the unit is enables and its associated electrical component or system is rendered operational. In the event of a mismatch, however, it is ascertained if the OTP memory of the unit contained the null code. If not, that is to say if the unit had previously been programmed and its internal code did not match the received code, then not only is the unit disabled but an error code in placed on the data bus to warn other units connected to the bus of the defect.

If the unit did contain a null code, that is to say it was not previously programmed, then it is enabled and a warning code is placed on the bus to warn of the presence of a new and as yet unconfigured unit.

The reader is programmed to analyse any error or warning signal placed on the bus by the other unit. If an essential unit reports a mismatch, then it is preferred to send signals to disable all units, even those which received their valid codes. If several units reply with error codes, then it is again desirable to disable all units. When only one ancillary unit fails to recognise the security code, then it may suffice to warn the driver.

If the reader receives several warning signals, indicating an attempt to replace several units at the same time, then it will again disable all units rapidly. Even though the new units will have been enabled for a short time, their OTP memory will not have been reprogrammed and repeated attempts will all lead to failure to start the vehicle. If however there is only one such warning signal, then this is taken to be a repair by an authorised dealer and after a time delay, if the unit has not been disabled, it will write the security code into its OTP memory.

It will be noticed that if a null key is used in a new reader and the signals are sent to new units, the entire system will operate correctly with null codes and without any writing of data to the various OTP memories. This facility enables all cars to remain uncoded while being manufactured and tested. The first time an encoded key is used, however, its coded will be written to the reader and into all the units. For this purpose, the facility of disabling all units when several null codes are detected can itself be disabled either by the fact that the reader itself contained a null code or by the fact that all units without exception have responded with a null code warning.

It is possible for the code read by the reader 12 from the key 10 to contain data in addition to the security code. For example, the key may contain data personal to the driver which is written to a E-PROM in the key by the reader 12. Such data may include seat positions, preferred radio frequencies and so on. It is also possible to stored personal fuelling and spark timing maps which alter the performance of the vehicle in dependence upon the driver. For example, performance may be limited for an inexperienced driver.

The presence of programmable memory in the key 10 allows further security features to be incorporated into the system. For example, a car hire company may record time and mileage information to limit the hire period and immobilise the vehicle outside the period of permitted use. This would prevent a thief from hiring a car legally, copying the key, then returning to steal it.

It should be stressed that the description given above is only by way of non-limiting example and that various modification may be made without departing from the scope of the invention as set out in the appended claims. The key and its reader need not be integrated into the ignition key and lock and one may use other forms of key capable of generating an electrical code.

The reader may, if desired, be integrated into one of the units 16 to 20, preferably the EMS unit 16. Such a construction can be manufactured with less expense and reduces the risk of tampering with the output signal of the reader.

As a further possibility, the described OTP memories may be replaced by EEPROM's which can be reprogrammed, the writing to the EEPROM being restricted to once by the program stored within the unit when it is manufactured. Such construction offers the possibility of enabling the manufacturer to reprogram the units if they are returned for reconditioning, but it is less desirable from the security point of view.

The data bus 14 described above is a serial bus and the reader 12 acts as the central unit from which other units are controlled. Such system architecture is also not fundamental to the invention and one may use a parallel with the units arranged in a ring or a star network. Furthermore, each unit may determine its own state depending on the signals on the data bus, instead of relying on signals from a central controller.

## Claims

1. A vehicle security system, comprising a coded key (10), a reader (12) for reading the code of the key (10) and generating an encoded electrical signal, a data transfer bus (14) connected to the reader, and a plurality of units (16,18,20) connected to the data transfer bus (14), characterised in that each unit comprises a signal processor for comparing encoded signals received over the data transfer bus with predetermined codes stored within the unit and operative to prevent operation of the unit if certain received codes are invalid, and in that each unit (16,18,20) is further arranged upon receiving an invalid code to transmit an error code over the data transfer bus (14) to the reader (12) or to other units connected to the bus, and upon detection of an error code on the bus from at least selected ones of the units (16,18,20), other units (16,18,20) connected to the bus are rendered inoperative by their signal processors even if the latter units had received valid codes from the reader (12).

2. A system as claimed in claim 1, wherein the units include units essential to safe operation of the vehicle and units associated with ancillary vehicle equipment, the nature of the response to an error code by the system being dependent on the function of the unit which generates the error code.

3. A system as claimed in claim 2, in which all units are rendered inoperative in response to an error code from an essential unit.

4. A system as claimed in claim 2 or 3, in all units are rendered inoperative in response to an error code from two or more ancillary units.

5. A system as claimed in any preceding claim, wherein each unit when first installed in a vehicle contains a null code and wherein the first non-null security code sent by the data bus (14) to the unit is stored in the memory of the unit.

6. A system as claimed in claim 5, wherein a unit containing a null code is operative to transmit a warning code to the reader or to other units connected to the bus prior to writing the security code to its memory.

7. A system as claimed in any preceding claim, wherein the key (10) is integrated with a conventional mechanical key for operating the door locks and the ignition lock.

8. A system as claimed in any preceding claim, wherein the key (10) comprises a passive circuit energised by a magnetic field or electro-magnetic radiation emitted by the reader (12).

9. A system as claimed in any preceding claim, wherein the key code comprises data in addition to the security code required to enable the encoded units (16,18,20).

## Patentansprüche

1. Sicherheitssystem für ein Fahrzeug, mit einem codierten Schlüssel (10), einem Lesegerät (12) zum Ablesen des Codes von dem Schlüssel (10) und zur Erzeugung eines codierten elektrischen Signals, einem mit dem Lesegerät verbundenen Datentransferbus (14), und einer Vielzahl von mit dem Datentransferbus (14) verbundenen Einheiten (16, 18, 20),
dadurch gekennzeichnet, daß jede Einheit einen Signalprozessor aufweist, der die über den Datentransferbus empfangenen codierten Signale mit in der Einheit gespeicherten vorbestimmten Codes vergleicht und dahingehend wirkt, daß er den Betrieb der Einheit verhindert, wenn bestimmte empfangene Codes ungültig sind, und daß jede Einheit (16, 18, 20) weiterhin so ausgelegt ist, daß sie bei Empfang eines ungültigen Codes über den Datentransferbus (14) einen Fehlercode an das Lesegerät (12) oder an andere, an dem Bus angeschlossene Einheiten sendet, und daß bei Erkennen eines Fehlercodes auf dem Datenbus von zumindest einigen ausgewählten Einheiten (16, 18, 20) andere an dem Bus angeschlossene Einheiten (16, 18, 20) von ihren Signalprozessoren betriebsunfähig geschaltet werden, auch wenn letztere Einheiten schon gültige Codes von dem Lesegerät empfangen hatten.

2. System nach Anspruch 1, worin die Einheiten solche Einheiten umfassen, die für den sicheren Betrieb des Fahrzeuges wesentlich sind, sowie Einheiten, die mit Nebenaggregaten des Fahrzeuges verbunden sind, wobei die Art der Reaktion des Systems auf einen Fehlercode von der Funktion der Einheit abhängig ist, die den Fehlercode erzeugt.

3. System nach Anspruch 2, worin in Reaktion auf einen Fehlercode von einer wesentlichen Einheit alle Einheiten betriebsunfähig geschaltet werden.

4. System nach Anspruch 2 oder 3, worin in Reaktion auf einen Fehlercode von zwei oder mehr Nebenaggregaten alle Einheiten betriebsunfähig geschaltet werden.

5. System nach einem beliebigen der vorangehenden Ansprüche, worin jede Einheit bei ihrem erstmaligen Einbau in ein Fahrzeug einen Nullcode enthält, und worin der erste nichtnullwertige, über den Datenbus (14) an die Einheit gesendete Sicherheitscode in dem Speicher der Einheit abgelegt wird.

6. System nach Anspruch 5, worin eine einen Nullcode enthaltende Einheit derart wirkt, daß sie ein Warnsignal an das Lesegerät oder an andere, mit dem Bus verbundene Einheiten abgibt, bevor sie den Sicherheitscode in ihrem Speicher festschreibt.

7. System nach einem beliebigen der vorangehenden Ansprüche, worin der Schlüssel (10) in einem konventionellen mechanischen Schlüssel zur Betätigung der Türschlösser und des Zündschlosses integriert ist.

8. System nach einem beliebigen der vorangehenden Ansprüche, worin der Schlüssel (10) einen passiven Schaltkreis aufweist, der durch ein Magnetfeld oder eine von dem Lesegerät (12) ausgesendete elektromagnetische Strahlung aktiviert wird.

9. System nach einem beliebigen der vorangehenden Ansprüche, worin der Schlüsselcode zusätzlich zu dem zum Betriebsbereit-Schalten der codierten Einheiten (16, 18, 20) erforderlichen Sicherheitscode auch Daten enthält.

## Revendications

1. Système de sécurité de véhicule comprenant une clé codée (10), un lecteur (12) destiné à lire le code de la clé (10) et à générer un signal électrique codé, un bus de transfert de données (14) relié au lecteur, et une pluralité d'unités (16, 18, 20) reliées au bus de transfert de données (14), caractérisé en ce que chaque unité comprend un processeur de signal destiné à comparer les signaux codés reçus sur le bus de transfert de données à des codes prédéterminés mémorisés à l'intérieur de l'unité, et agissant pour empêcher le fonctionnement de l'unité si certains codes reçus sont invalides, et en ce que chaque unité (16, 18, 20) est en outre agencée pour transmettre à la réception d'un code invalide un code d'erreur sur le bus de transfert de données (10) vers le lecteur (12) ou vers les autres unités reliées au bus, et lors de la détection d'un code d'erreur sur le bus provenant au moins des unités sélectionnées parmi les unités (16, 18, 20), d'autres unités (16, 18, 20) reliées au bus sont rendues inopérantes par leurs processeurs de signal même si ces dernières unités ont reçu des codes valides provenant du lecteur (12).

2. Système selon la revendication 1, dans lequel les unités comprennent des unités essentielles pour le fonctionnement sûr du véhicule et des unités associées aux équipements annexes du véhicule, la nature de la réponse à un code d'erreur par le système étant liée à la fonction de l'unité qui a généré le code d'erreur.

3. Système selon la revendication 2, dans lequel toutes les unités sont rendues inopérantes en réponse à un code d'erreur provenant d'une unité essentielle.

4. Système selon la revendication 2 ou 3, dans lequel toutes les unités sont rendues inopérantes en réponse à un code d'erreur provenant de deux unités annexes ou plus.

5. Système selon l'une quelconque des revendications précédentes, dans lequel chaque unité, lorsqu'elle est installée pour la première fois dans un véhicule contient un code neutre et dans lequel le premier code de sécurité non neutre envoyé par le bus de données (14) à l'unité est mémorisé dans la mémoire de l'unité.

6. Système selon la revendication 5, dans lequel une unité contenant un code neutre agit pour transmettre un code d'avertissement au lecteur ou à d'autres unités reliées au bus, avant d'écrire le code de sécurité dans sa mémoire.

7. Système selon l'une quelconque des revendications précédentes, dans lequel la clé (10) est intégrée dans une clé mécanique classique destinée à faire fonctionner les serrures de porte et la serrure de contact.

8. Système selon l'une quelconque des revendications précédentes, dans lequel la clé (10) comprend un circuit passif dont l'alimentation est fournie par un champ magnétique ou un rayonnement électromagnétique émis par le lecteur (12).

9. Système selon l'une quelconque des revendications précédentes, dans lequel le code de la clé comprend des données en plus du code de sécurité nécessaire à l'activation des unités codées (16, 18, 20).
